# EUROPEAN PATENT APPLICATION

(11) **EP 4 167 685 A1**
(43) Date of publication of application: **19.04.2023**
(21) Application number: 21202249.5
(22) Date of filing: 12.10.2021
(51) Int. Cl.: H05B 3/34, B60H 1/00, F24H 1/12

(54) **ELECTRIC HEATING DEVICE, IN PARTICULAR FOR A HEAT EXCHANGER**

(71) Applicant: MAHLE International GmbH, 70376 Stuttgart (DE)
(72) Inventor: BÖGERSHAUSEN, Stefan, 70347 Stuttgart (DE); Espin, Francisco González, 46185 La Pobla de Vallbona (ES); HALLBERG, Torbjorn, 46023 Valencia (ES); HÜLSS, Marcel, 70563 Stuttgart (DE); VIEHRIG, Falk, 70376 Stuttgart (DE); WANKE, Robin, 70569 Stuttgart (DE); Waßmer, Emma, 64295 Darmstadt (DE)
(74) Representative: BRP Renaud & Partner mbB Rechtsanwälte Patentanwälte Steuerberater

(57) **Abstract**

The invention relates to an electrical heating device (1), in particular for a heat exchanger (11). The heating device (1) comprises at least one substrate (2) having a top side (10a) and a bottom side (10b) opposite the top side (10a). Furthermore, the heating device (1) comprises at least one thick-film layer (3) of an electrically conductive thick-film material (DFM) arranged on the top side (2a) and/or the bottom side (2b).

The invention further relates to a heat exchanger (11) with at least one such heating device (1) and to a motor vehicle (100) with such a heat exchanger (11).

## Description

The present invention relates to an electric heating device, in particular for a heat exchanger. The invention further relates to a heat exchanger for heating a fluid with at least one such heating device. The invention also relates to a motor vehicle with such a heat exchanger.

A heat exchanger is in particular used for heating a fluid. For this, such a heat exchanger usually comprises an electric heating device. It is generally desirable to increase the efficiency of such heating devices.

For example, in motor vehicles with purely electric drive, the waste heat generated by an internal combustion engine during operation is not available. Heat - for example to heat the interior of the motor vehicle - must therefore be generated by other means. Electrical heating devices, in particular so-called PTC heaters, are known. Such PTC heaters have an electrical resistance that also increases with increasing temperature. The increase in electrical resistance is accompanied by a decrease in electrical current through the heater. The PTC property of the heater thus has a self-regulating effect and prevents the PTC heater from heating up too much. However, this limits the maximum temperature that can be reached by the PTC heater. Typical maximum heating temperatures are about 200°C.

In principle, such conventional PTC heaters can be used in heat exchangers through which at least one fluid flows as a heat transfer medium in order to heat the fluid. However, the efficiency of heating is limited due to the above-described self-regulating property of the PTC material.

It is thus an object of the present invention to show new ways in the development of electrical heating devices and heat exchangers with such a heating device as well as for a motor vehicle with such a heat exchanger. In particular, an improved heating device, heat exchanger and motor vehicle are to be presented, which are characterized by an improved heating performance and, at the same time, a simple design, which permits flexible use of the heating device in different designs of heat exchangers.

This object is solved by the subject matter of the independent patent claims. Preferred embodiments are the subject matter of the dependent patent claims.

Accordingly, the basic idea of the invention is to use the so-called thick film technology ("TFR") for an electric heating device. This means that a thick-film layer with a certain layer thickness of a so-called thick-film material is applied to a substrate and forms an electrical conduction path that can be electrically energized.

The thick-film materials that come into question for this purpose also have an electrical resistance that increases with increasing temperature. However, thick-film materials lack the self-regulating property mentioned above, so that these materials can reach much higher temperatures - up to 400°C, for example - when electrically energized. Thus, an electric heater using TFR technology can achieve much higher heating powers than a PTC heater.

A suitable substrate on which the thick-film layer is arranged can be a component of the heat exchanger.

Preferebaly, the component of the heat exchanger limits a fluid path through which the fluid can flow. In this way, the fluid can be heated by the electric heating device. In case the heat exchanger is a plate heat exchanger, the substrate may be a heat exchanger plate of the heat exchanger. In the case that the heat exchanger is a shell-and-tube heat exchanger, the substrate may be a tubular body of the heat exchanger through which the fluid can flow.

An electrical heating device according to the invention, in particular for a heat exchanger, comprises at least one substrate having a top side and a bottom side opposite the top side. According to the invention, an electrically heatable thick-film layer of an electrically conductive thick-film material is arranged on the top side and, alternatively or additionally, on the bottom side.

In a preferred embodiment, the substrate is electrically insulating. For this purpose, the substrate may in particular comprise an electrically insulating material. In this variant, the at least one electrically conductive thick-film layer can be arranged directly - in particular without an electrically insulating intermediate layer - on the upper side or bottom side of the substrate without the risk of an electrical short circuit of the thick-film layer with the substrate. This variant can be used in particular in heat exchangers in which the fluid path is bounded by an electrically insulating component. This may be particularly necessary when using an electrically conductive fluid as the heat transfer medium.

In another preferred embodiment, the substrate is electrically conductive. For this purpose, it may in particular consist of an electrically conductive material. In this embodiment, an electrically insulating intermediate layer, in particular made of an electrically insulating material, is arranged between the at least one thick-film layer and the upper side or bottom side of the substrate in order to prevent an electrical short circuit of the thick-film layer with the substrate. This variant can be used in particular in heat exchangers in which the fluid path is limited by an electrically conductive component. This is often the case in heat exchangers, since electrically conductive components such as metals have the high thermal conductivity typically required for use in heat exchangers.

According to an advantageous further development, a first thick-film layer is arranged on the upper side of the substrate and a second thick-film layer is arranged on the bottom side of the substrate. This variant proves to be particularly advantageous if a fluid flows around both sides of the substrate when used in a heat exchanger. This is typically the case when said component fluidically separates two fluid paths of the heat exchanger.

Expediently, an electrically insulating layer, preferably made of an electrically insulating material, can be arranged on the at least one thick-film layer. This can be particularly helpful when an electrically conductive fluid is used as the heat transfer medium, since this prevents electrical short-circuiting of the fluid with the thick-film layer.

If, as explained above, two thick-film layers are provided which are arranged on both sides of the substrate, it consequently proves to be particularly advantageous if one such electrically insulating layer is arranged on each of the two thick-film layers.

According to a further advantageous development, the heating device can comprise a first and a second substrate, between which the at least one thick-film layer is arranged in a sandwich-like manner. This variant allows two substrates to be heated simultaneously.

According to an advantageous further development, the two substrates are electrically insulating, preferably made of an electrically insulating material. In this further development, a first and a second thick-film layer are arranged between the two substrates. In this case, the first thick-film layer - facing the second substrate - is arranged on the first substrate, and the second thick-film layer - facing the first substrate - is arranged on the second substrate. Furthermore, in this variant, an electrically insulating intermediate layer, preferably made of an electrically insulating material, is arranged in a sandwich-like manner between the two thick-film layers. This measure prevents an undesirable electrical short-circuit between the two thick-film layers when electrically energized.

According to another preferred embodiment, the two substrates are electrically conductive. In this embodiment, a first electrically insulating intermediate layer, preferably made of an electrically insulating material, is sandwiched between the first substrate and the at least one thick-film layer to prevent electrical short-circuiting of the thick-film layer with the electrically conductive substrate. This variant can also be used in particular in heat exchangers in which the fluid path is limited by an electrically conductive component. This is often the case in heat exchangers, since electrically conductive components such as metals have the high thermal conductivity typically required for use in heat exchangers. Furthermore, in this embodiment, a second electrically insulating intermediate layer, preferably made of an electrically insulating material, is sandwiched between the second substrate and the at least one thick film layer to prevent an electrical short circuit between the two electrically conductive thick film layers.

It is expedient to have exactly one thick-film layer. This variant is particularly easy to implement technically and is therefore cost-effective. Alternatively, two thick-film layers, i.e. a first and a second thick-film layer, can be provided, between which a further electrically insulating intermediate layer, preferably made of an electrically insulating material, is arranged.

Expediently, a metal, an alloy or ceramics may be used as the material for the substrate. For instance, aluminum, stainless steel or ceramics can be uses as materials of the substrate.

Advantageously the substrate has a thickness of less than 5 mm. This leads to a compact design and an improved heat transfer to the fluid. Preferably the substrate has a thickness between 0,1 mm and 3 mm.

The invention further relates to a heat exchanger, in particular for a motor vehicle, preferably for an electric vehicle.

The heat exchanger comprises an electrical heating device according to the invention and, in addition, at least one fluid path through which a fluid can flow, wherein the fluid path is, at least in sections, delimited by the at least one electrical heating device. The advantages of the heating device according to the invention explained above are therefore also transferred to the heat exchanger according to the invention.

According to a preferred embodiment, the heating device fluidically separates two adjacent fluid paths of the heat exchanger. Thus, both fluid paths or the fluids conducted through the two fluids can be heated by means of the heating device.

In embodiments, the heat exchanger comprises two heating devices distanced to each other, wherein a fluid path leads between the heating devices and is delimited by each heating device at least partially. As a result, fluid flowing along the fluid path can be heated by both heating devices.

In preferred embodiments the number of heating devices in the heat exchanger is one less than the number of fluid paths, wherein each fluid path is delimited by at least one heating device. That is, the heat exchanger comprises a number of N fluid paths running parallel, wherein N is bigger than 2. The heat exchanger further comprises a number of N-1 heating devices running parallel, wherein each heating device delimits at least one of the flow paths at least partially. This leads to an improved efficiency of the heat exchanger. Moreover, the design of the heat exchanger is simplified. The arrangement in particular allows for a modular design of the heat exchanger, wherein a bigger heat exchanger and/or an increasing number of parallel fluid paths can simply be manufactured by arranging a growing number of distanced and parallel heating devices in a bigger housing.

The heat exchanger can generally be used in any application to heat a fluid used in the application.

In particular, the heat exchanger can be used in a motor vehicle, particularly in an electric vehicle, to heat a fluid flowing through the motor vehicle. The fluid might be a liquid, for instance a coolant, or a gas, for instance air.

Further important features and advantages of the invention are apparent from the subclaims, from the drawing and from the accompanying figure description based on the drawings.

It is understood that the features mentioned above and those still to be explained below can be used not only in the combination indicated in each case, but also in other combinations or on their own, without leaving the scope of the present invention.

Preferred embodiments of the invention are shown in the drawings and will be explained in more detail in the following description, wherein identical reference signs refer to identical or similar or functionally identical components.

It shows, schematically in each case:
- Figs. 1 to 5:: various exemplary embodiments of the heating device according to the invention, in each case in a top view of the substrate,
- Fig. 6: an isometric view of an embodiment of the heating device,
- Fig. 7: various exemplary embodiments of a heat exchanger with at least one heating device.

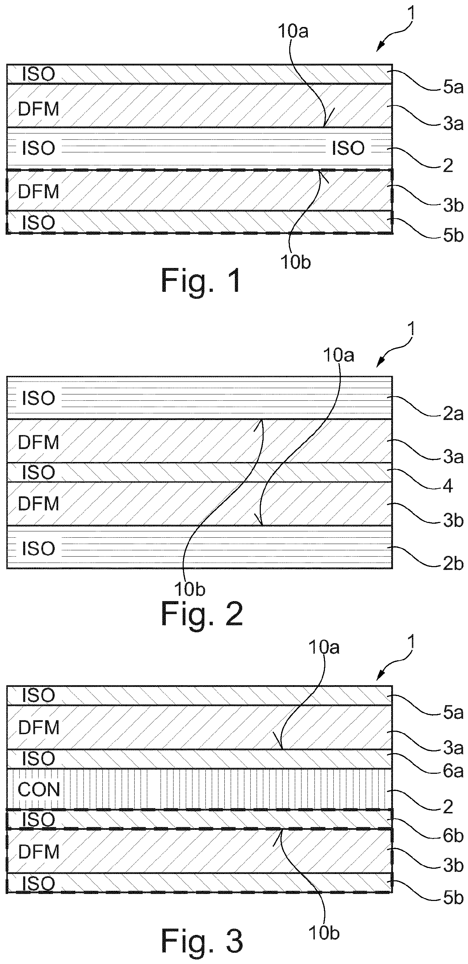

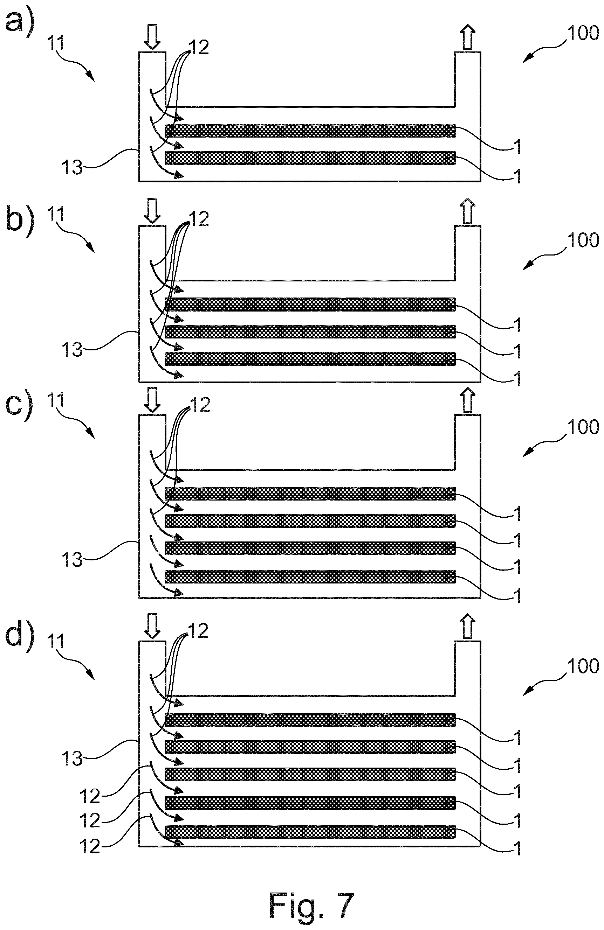

An electric heating device 1, as exemplary shown in Figures 1 to 7, is used in a heat exchanger 11, as exemplary shown in Figures 7, to heat a fluid. The heat exchanger 11 can be used in a motor vehicle 100 for heating air or a coolant as fluid.

Figure 1 shows a first example of an electrical heating device 1 according to the invention. The heating device 1 comprises a substrate 2, which has a top side 10a and a bottom side 10b opposite the top side 10a. The substrate 2 is electrically insulating and for this purpose is made of an electrically insulating material ISO. A first thick film layer 3a of an electrically conductive thick film material DFM is directly arranged on the upper side 10a of the substrate 2. On the bottom side 2b of the substrate 2 is directly arranged second thick film layer 3b of the electrically conductive thick film material DFM.

A first electrically insulating layer 5a of an electrically insulating material ISO is arranged on the first thick film layer 3a. A second electrically insulating layer 5b of electrically insulating material ISO is arranged on the second thick film layer 3b. In a simplified variant of the example of Figure 1, the second thick-film layer 3b and the second electrically insulating layer 5b can be dispensed with. This is not explicitly shown in Figure 1, but is to be indicated by a dashed frame enclosing the second thick-film layer 3b and the second electrically insulating layer 5b.

Figure 2 shows a variant of the example of Figure 1. In the example of Figure 2, the heating device 1 comprises a first and a second substrate 2a, 2b, contrary to the example of Figure 1. Between the two substrates 2a, 2b, the first and the second thick-film layers 3a, 3b are arranged, wherein the first thick-film layer 3a is arranged on the bottom side 10b of the first substrate 2a and the second thick-film layer 3b is arranged on the upper side 10a of the second substrate 2b. In turn, an electrically insulating intermediate layer 4 made of an electrically insulating material ISO is sandwiched between the two thick-film layers 3a, 3b.

Figure 3 shows a further variant of Figure 1, in which the heating device 1 comprises only one substrate 2, which, however, in contrast to the example of Figure 1, is electrically conductive and for this purpose consists of an electrically conductive material CON. In the example of Figure 3, the heating device 1 comprises, as in the example of Figure 1, a first and a second thick-film layer 3a, 3b, which, however, are not arranged directly on the upper side 10a and on the bottom side 10b, respectively. Rather, a first electrically insulating intermediate layer 6a made of an electrically insulating material ISO is sandwiched between the first substrate 2a and the first thick-film layer 3a. In addition, a second electrically insulating intermediate layer 6b made of an electrically insulating material ISO is sandwiched between the second substrate 2b and the second thick-film layer 3b. In a simplified variant of the example of Figure 3, the second thick-film layer 3a, the second electrically insulating layer 5b and the second electrically insulating intermediate layer 6b can be dispensed with. This is not explicitly shown in Figure 3, but is to be indicated by a dashed frame enclosing the three layers 3b, 5b and 6b.

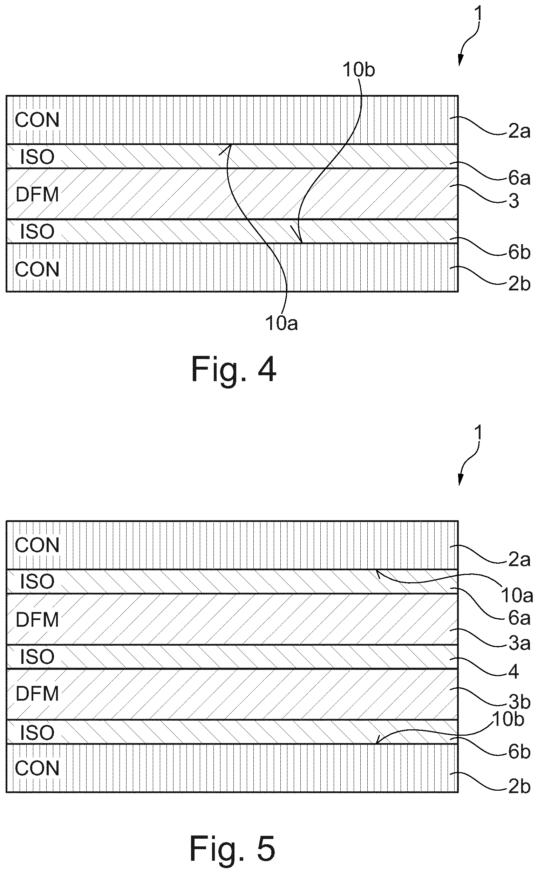

Figure 4 shows a further variant in which two substrates 2a, 2b are provided and the two substrates 2a, 2b are electrically conductive. Exactly one thick-film layer 3 is arranged between the two substrates 2a, 2b. Furthermore, a first electrically insulating intermediate layer 6a made of an electrically insulating material ISO is sandwiched between the first substrate 2a and the thick-film layer 3. Correspondingly, a second electrically insulating intermediate layer 6b made of an electrically insulating material ISO is sandwiched between the second substrate 2b and the at thick-film layer 3.

Figure 5 shows a further development of the example of Figure 4. Contrary to the example of Figure 4, not only a single thick-film layer 3 is provided here. Rather, a first and a second thick-film layer 3a, 3b are provided, between which a further electrically insulating intermediate layer 4 made of an electrically insulating material ISO is arranged in a sandwich-like manner.

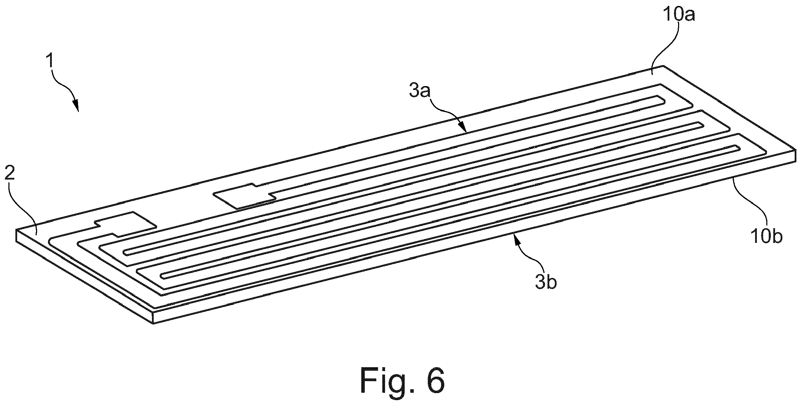

Figure 6 shows an isometric view of an exemplary embodiment of the heating device 1. In this embodiment, the heating device 1 comprises one substrate 2, wherein a corresponding thick-film layer 3a is applied on upper side 10a and a corresponding thick-film layer 3b is applied on the bottom side 10b of the substrate 2 (not visible). As shown in Figure 6, each thick-film layer 3 can run in a meander like manner on the corresponding side 10 of the substrate 2.

Figure 7 shows four different exemplary embodiments shown a)-d) of a heat exchanger 11. As shown in Figure 7, the heat exchanger 11 comprises at least one electric heating device 1 and at least one fluid path 12 through which a fluid flows in operation. The at least one fluid path 12 is thereby delimited by the at least one electrical heating device 1 at least partially. In the embodiments shown, each heating device 1 entirely delimits at least one corresponding of the fluid paths 12.

In the exemplary embodiments shown, the heat exchanger 11 comprises at least two heating devices 1 running parallel and distanced to each other. Successive heating devices 1 delimit a flow path 12 between them. Thus, in the exemplary embodiments shown, at least one heating device 1 fluidically separates two adjacent fluid paths 12 of the heat exchanger 11.

In the exemplary embodiment denoted a) in Figure 7, the heat exchanger 11 comprises a number of three parallel flow paths 12 and two heating devices 1. In the exemplary embodiment denoted b) in Figure 7, the heat exchanger 11 comprises a number of four parallel flow paths 12 and three heating devices 1. In the exemplary embodiment denoted c) in Figure 7, the heat exchanger 11 comprises a number of five parallel flow paths 12 and four heating devices 1. In the exemplary embodiment denoted d) in Figure 7, the heat exchanger 11 comprises a number of six parallel flow paths 12 and four heating devices 1. Thus, in the exemplary embodiments shown, the number N of parallel fluid paths 12 is bigger or than or equal to three and the number of heating devices 1 is one less than N, wherein each heating device 1 delimits at least one of the flow paths 12.

As can be derived from Figure 7, different numbers of fluids paths 12 and/or different sizes of the heat exchanger 11 can simply be manufactured by adjusting the number of heating devices 1 and the size of a housing 13 of the heat exchanger 11, in which the heating devices 1 are arranged. Thus, a modular design of the heat exchanger 11 is achieved.

## Claims

1. Electric heating device (1), in particular for a heat exchanger,
- with at least one substrate (2, 2a, 2b) having an upper side (10a) and a bottom side (10b) opposite the upper side (10a);
- with at least one thick-film layer (3, 3a, 3b) of an electrically conductive thick-film material (DFM) arranged on the upper side (2a) or/and on the bottom side (2b).

2. Heating device according to claim 1,
**characterized in that**
- the at least one substrate (2, 2a, 2b) is configured to be electrically insulating, in particular consists of an electrically insulating material (ISO);
- the at least one thick-film layer (3, 3a, 3b) is arranged directly on the upper side (10a) or bottom side (10b) of the substrate (2, 2a, 2b).

3. Heating device according to claim 1 or 2,
**characterized in that**
- the at least one substrate (2) is configured to be electrically conductive, in particular consists of an electrically conductive material (CON);
- an electrically insulating intermediate layer (6a, 6b), in particular of an electrically insulating material (ISO), is arranged between the at least one thick-film layer (3, 3a, 3b) and the upper side (10a) or bottom side (10b) of the substrate (2, 2a, 2b).

4. Heating device according to one of the claims 1 to 3,
**characterized in that**
a first thick-film layer (3a) is arranged on the upper side (10a) of the substrate (2) and a (second) thick-film layer (3b) is arranged on the bottom side (2b) of the substrate (2).

5. Heating device according to one of the preceding claims,
**characterized in that**
an electrically insulating layer (5a, 5b), preferably of an electrically insulating material (ISO), is arranged on the at least one thick-film layer (3, 3a, 3b).

6. Heating device according to one of the preceding claims,
**characterized in that**
a first and a second substrate (2a, 2b) are provided, between which the at least one thick-film layer (3, 3a, 3b) is arranged in a sandwich-like manner.

7. Heating device according to claim 6,
**characterized in that**
- the two substrates (2a, 2b) are electrically insulating, preferably made of an electrically insulating material (ISO);
- a first and a second thick-film layer (3a, 3b) are arranged between the two substrates (2a, 2b);
- an electrically insulating intermediate layer (4), preferably made of an electrically insulating material (ISO), is sandwiched between the two thick-film layers (3a, 3b).

8. Heating device according to claim 6,
**characterized in that**
- the two substrates (2a, 2b) are electrically conductive;
- a first electrically insulating intermediate layer (6a), preferably made of an electrically insulating material (ISO), is sandwiched between the first substrate (2a) and the at least one thick-film layer (3);
- a second electrically insulating intermediate layer (6b), preferably of an electrically insulating material (ISO), is sandwiched between the second substrate (2b) and the at least one thick-film layer (3).

9. Heating device according to one of the preceding claims,
**characterized in that**
exactly one thick-film layer (3) is provided.

10. Heating device according to one of the claims 1 to 8,
**characterized in that**
a first and a second thick-film layer (3a, 3b) are provided, between which a further electrically insulating intermediate layer (4), preferably made of an electrically insulating material (ISO), is arranged.

11. Heat exchanger (11), in particular for a motor vehicle (100),
- with at least one electric heating device (1) according to one of the preceding claims;
- having at least one fluid path (12) through which a fluid can flow and which is delimited at least in sections by the at least one electrical heating device (1).

12. Heat exchanger according to claim 11,
**characterized in that**
the at least one heating device (1) fluidically separates two adjacent fluid paths (12) of the heat exchanger (11).

13. Heat according to claim 11 or 12,
**characterized in that**
the heat exchanger (11) comprises at two heating devices (1) distanced to each other, wherein a fluid path (12) leads between the heating devices (1) and is at least partially delimited by each heating device (1).

14. Heat exchanger according to any of claims 11 to 13,
**characterized in that**
- the heat exchanger (11) comprises a number of N fluid paths (12) running parallel, wherein N > 2;
- the heat exchanger (11) comprises a number of N-1 heating devices (1) running parallel, wherein each heating device (1) delimits at least one of the flow paths (12) at least partially.

15. Motor vehicle (100) with a heat exchanger (11) according to any one the claims 11 to 14.
